# FASCICULE DE BREVET EUROPEEN

(11) **EP 1 147 538 B1**
(45) Date de publication et mention de la délivrance du brevet: **25.08.2004**
(21) Numéro de dépôt: 00974587.8
(22) Date de dépôt: 27.10.2000
(51) Int. Cl.: H01J 9/50

(54) **PROCEDE DE COMMANDE DE STRUCTURE COMPORTANT UNE SOURCE D'ELECTRONS A EFFET DE CHAMP**
VERFAHREN ZUR STEUERUNG EINER STRUKTUR MIT EINER ELEKTRONEN-FELDEMISSIONSQUELLE
METHOD OF DRIVING A STRUCTURE COMPRISING A FIELD EMISSION ELECTRON SOURCE

(30) Priorité: 28.10.1999 FR 9913499
(43) Date de publication de la demande: 24.10.2001
(73) Titulaire: COMMISSARIAT A L'ENERGIE ATOMIQUE, 75752 Paris Cédex 15 (FR)
(72) Inventeur: LEVY, François, F-38640 Claix (FR); SARRASIN, Denis, F-38360 Sassenage (FR)
(74) Mandataire: Audier, Philippe André
(86) Numéro de dépôt international: PCT/FR2000/003005
(87) Numéro de publication internationale: WO 2001/031672

(56) Documents cités:
- EP-A- 0 376 825
- EP-A- 0 660 368
- EP-A- 0 817 232

## Description

### Domaine technique et art antérieur

L'invention concerne un procédé de commande de structure comportant une source d'électrons à effet de champ.

Une source d'électrons à effet de champ se présente généralement sous la forme d'une pluralité de micropointes, ou plots, qui sont utilisées comme des canons à électrons.

Les micropointes, ou plots, peuvent être dirigées vers une anode d'accélération garnie d'un matériau luminescent. Ce matériau, en réponse aux électrons, émet une lumière visible utilisable pour un affichage.

Les micropointes, ou plots, peuvent également être dirigées vers une anode équipée d'un matériau capable d'émettre un rayonnement X en réponse à l'excitation des électrons.

Ainsi, l'invention trouve-t-elle des applications dans la fabrication de dispositifs d'affichage à écrans plats de visualisation et dans la réalisation de tubes à rayons X ou de tout autre dispositif comportant une source d'électrons comprenant des éléments à effet de champ (micropointes, plots, etc.).

Dans la suite de la description, on prendra le plus souvent, par souci de simplification, l'exemple d'un écran de visualisation utilisant une source à micropointes. Cependant, de façon plus générale, l'invention s'applique également à toute structure utilisant une source d'électrons à effet de champ.

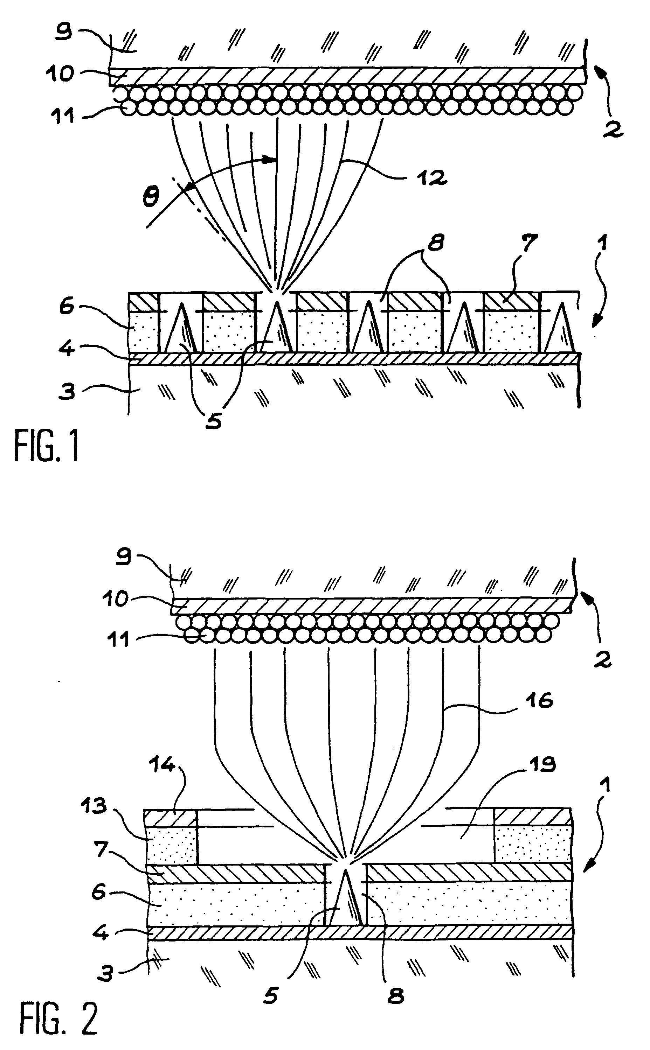

La figure 1 représente une vue en coupe transversale d'un écran de visualisation à micropointes selon l'art connu. Par souci de simplification, seules quelques micropointes alignées ont été représentées. L'écran est constitué par une cathode 1, qui est une structure plane, disposée en regard d'une autre structure plane formant l'anode 2. La cathode 1 et l'anode 2 sont séparées par un espace dans lequel on a fait le vide. La cathode 1 comprend un substrat de verre 3 sur lequel est déposé le niveau conducteur 4 en contact avec les pointes émettrices d'électrons 5. Le niveau conducteur 4 peut être réalisé de différentes façons. Il comprend des conducteurs cathodiques associés généralement avec une couche résistive. Les conducteurs cathodiques peuvent former diverses géométries et en particulier des maillages. Le niveau conducteur 4 est recouvert d'une couche isolante 6, par exemple en silice, elle-même recouverte d'une couche conductrice 7. Des trous 8, d'environ 1 µm de diamètre, ont été réalisés au travers des couches 6 et 7 jusqu'au niveau conducteur 4 pour déposer les pointes 5 sur ce niveau conducteur. La couche conductrice 7 sert de grille d'extraction pour les électrons qui sont émis par les pointes 5. L'anode 2 comprend un substrat généralement transparent 9 recouvert d'une électrode généralement transparente 10, sur laquelle sont déposés un ou plusieurs matériaux luminescents ou luminophores 11.

Le fonctionnement de cet écran va maintenant être décrit. L'anode 2 est portée à un potentiel positif de plusieurs centaines de volts par rapport aux pointes 5. Sur la grille d'extraction 7, on applique un potentiel positif de quelques dizaines de volts par rapport aux pointes 5. Des électrons sont alors arrachés aux pointes 5 et sont attirés par l'anode 2. Les trajectoires des électrons sont comprises dans un cône de demi-angle au sommet θ dépendant de différents paramètres. Le faisceau d'électrons 12 est défocalisé et cela d'autant plus que la distance entre l'anode et la cathode est grande. L'une des façons d'augmenter le rendement des luminophores, donc la luminosité des écrans, est d'accroître la tension d'accélération et donc la différence de potentiels entre anode et cathode (typiquement entre 1 000 et 10 000 V), ce qui implique d'écarter davantage l'anode et la cathode afin d'éviter la formation d'un arc électrique entre ces deux électrodes.

Si on désire conserver une bonne résolution sur l'anode, il faut alors refocaliser le faisceau d'électrons. Cette refocalisation est obtenue classiquement grâce à une grille supplémentaire qui peut être soit placée entre l'anode et la cathode (grille suspendue), soit disposée sur la cathode (grille intégrée).

La figure 2 illustre le cas où la grille supplémentaire est disposée sur la cathode. Pour plus de clarté dans le dessin, la figure 2 reprend l'exemple de la figure 1 limité à une seule micropointe. Une couche isolante 13 a été déposée sur la grille d'extraction 7 et supporte une couche métallique 14 servant de grille de focalisation. Des trous 15, de diamètre adéquat (typiquement entre 8 et 10 µm) et concentriques aux trous 8, ont été gravés dans les couches 13 et 14. La couche isolante 13 sert à isoler électriquement la grille d'extraction 7 et la grille supplémentaire 14. La grille supplémentaire est polarisée par rapport à la cathode de façon à donner au faisceau d'électrons 16 la forme représentée à la figure 2.

Dans un écran plat couleur, les luminophores sont déposées sur l'anode sous forme de bandes parallèles, successivement rouge-vert-bleu, etc. Pour une bonne qualité de l'image restituée, il faut éviter les mélanges de couleurs. Pour cela, il faut que tous les électrons émis par les éléments à effet de champ destinés à une couleur donnée aillent sur le luminophore correspondant, et non pas sur des luminophores voisins. On obtient ce résultat par le phénomène de focalisation. Etant donnée la structure en bandes des luminophores, il est important que la focalisation se fasse dans la direction perpendiculaire à ces bandes pour éviter les mélanges de couleurs. De même, pour un écran monochrome, la focalisation des électrons sur le luminophore est favorable car elle permet d'améliorer la résolution de l'écran.

Il est connu par ailleurs, pour d'autres structures comportant des sources à effet de champ, d'utiliser une ou plusieurs autres grilles supplémentaires par exemple pour protéger la cathode du champ électrique induit par l'anode et éviter ainsi des phénomènes de claquage.

Il est également connu d'améliorer le fonctionnement des écrans à micropointes par une séquence d'adressage particulière consistant à prévoir des phases de régénération pendant lesquelles l'anode est portée à un potentiel suffisamment bas pour être répulsive pour les électrons émis par les micropointes.

Cette séquence d'adressage est décrite dans le brevet français intitulé "*Procédé de commande d*'*écran plat de visualisation*", *déposé le 8 juin 1995 au nom de PIXTECH S*.*A*. *sous le numéro de dépôt FR 19950007017 (numéro de publication FR2735266).*

Une telle séquence d'adressage présente l'avantage de supprimer le phénomène connu sous l'expression de "dérive de couleur". Le phénomène de dérive de couleur correspond à la variation de couleur qui se produit sur l'écran de visualisation quand on affiche, pendant une durée relativement longue pouvant aller de quelques secondes à quelques minutes, une couleur uniforme correspondant à l'une des trois couleurs fondamentales (rouge, vert, bleu).

Pendant une phase de régénération, l'anode n'attire pas les électrons. Les luminophores ne sont alors pas excités et les zones de l'écran régénérées n'ont pas d'influence sur l'image formée.

Dans le cas des écrans haute tension, la tension d'accélération appliquée à l'anode peut atteindre plusieurs kilovolts. La commutation rapide du potentiel d'anode vers un potentiel suffisamment bas par rapport au potentiel de cathode, par exemple de quelques volts, est alors difficile à mettre en oeuvre. Les circuits pour mettre en oeuvre une telle commutation sont en effet complexes, coûteux et volumineux.

L'invention ne présente pas les inconvénients mentionnés ci-dessus.

### Exposé de l'invention

En effet, l'invention concerne un procédé de commande de structure à éléments à effet de champ, notamment pour écran cathodoluminescent de visualisation d'image ou pour tube à rayons X, la structure comprenant une cathode munie d'éléments à effet de champ, une anode, une grille d'extraction et une grille supplémentaire, le procédé comprenant au moins une phase d'émission des électrons émis par les éléments à effet de champ vers l'anode et au moins une phase de régénération pendant laquelle les électrons issus des éléments ne sont pas transmis à l'anode. La phase de régénération est mise en oeuvre par application sur la grille supplémentaire d'un potentiel de blocage des électrons qui retourne alors vers la cathode. Par retour vers la cathode, il faut entendre un retour des électrons vers la cathode elle-même ou son voisinage.

Selon l'invention, la phase de régénération est de préférence indépendante de la phase d'émission en ce qui concerne les valeurs de potentiel appliquées sur les grilles d'extraction et/ou sur les conducteurs cathodiques au cours de ces phases. Ainsi, dans l'application à un écran de visualisation, la phase de régénération peut-elle être indépendante de l'image affichée.

L'invention concerne également un procédé de visualisation d'images sur écran, caractérisé en ce qu'il met en oeuvre un procédé de commande selon l'invention tel que mentionné ci-dessus.

L'invention concerne encore un procédé de formation d'images sur un tube à rayons X, caractérisé en ce qu'il met en oeuvre un procédé de commande selon l'invention tel que mentionné ci-dessus.

Un avantage de l'invention est de pouvoir utiliser une tension d'accélération (c'est-à-dire une différence de potentiels entre anode et cathode) élevée pour attirer les électrons émis par les éléments à effet de champ tout en maintenant cette tension lors des phases de régénération. Il n'est alors plus nécessaire de commuter le potentiel d'anode contrairement à l'art antérieur.

D'autres caractéristiques et avantages de l'invention apparaîtront à la lecture d'un mode de réalisation préférentiel fait en référence aux figures ci-annexées parmi lesquelles :

### Brève description des figures

- la figure 1 représente une vue en coupe transversale d'un écran de visualisation à micropointe selon un premier mode de réalisation de l'art connu ;
- la figure 2 représente une vue en coupe transversale d'un écran de visualisation à micropointes selon un deuxième mode de réalisation de l'art connu ;
- les figures 3A, 3B, 3C, 3D représentent, selon l'invention, un diagramme temporel des tensions appliquées aux différents éléments d'une structure à éléments à effet de champ lors d'un cycle d'adressage ;

Sur toutes les figures, les mêmes repères désignent les mêmes éléments.

### Description détaillée de modes de réalisation de l'invention

Les figures 1 et 2 ont été décrites ci-dessus, il est donc inutile d'y revenir.

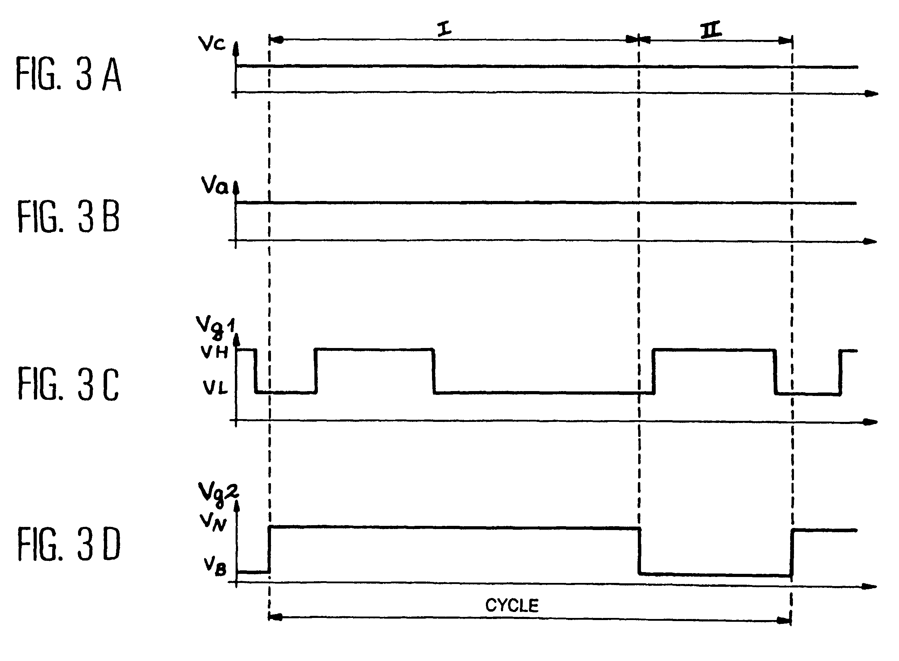

Les figures 3A, 3B, 3C et 3D représentent, selon l'invention, un diagramme temporel des tensions appliquées aux différents éléments d'une structure à éléments à effet de champ lors d'un cycle d'adressage. Le cycle d'adressage comprend une phase d'émission I et une phase de régénération II qui succède à la phase d'émission I.

Le procédé de l'invention s'applique à une structure comportant au moins quatre électrodes, à savoir une anode, une cathode, une grille d'extraction et une grille supplémentaire. A titre d'exemple non limitatif, l'invention peut donc s'appliquer à une structure telle que représentée en figure 2.

Selon l'invention, une tension est appliquée sur la grille supplémentaire afin de créer, pendant les phases de régénération, une barrière de potentiel entre la grille d'extraction et l'anode.

Les figures 3A, 3B, 3C et 3D représentent respectivement la tension Vc appliquée à un élément ou à un groupe d'éléments à effet de champ, la tension Va appliquée à l'anode, la tension Vg1 appliquée à la grille d'extraction et la tension Vg2 appliquée à la grille supplémentaire, lors d'un cycle d'adressage.

Un cycle d'adressage se compose d'une phase d'émission et d'une phase de régénération.

Pendant la phase d'émission, une différence de potentiel appropriée doit être appliquée entre la cathode et la grille d'extraction selon que l'on veut ou non une émission par la cathode. A titre d'exemple non limitatif, sur les figures 3A et 3C, la tension Vc est continue (par exemple égale à 0 volt) et la tension Vg1 se présente sous la forme d'une succession d'impulsions comprises entre un niveau haut VH (par exemple égal à 80 volts) et un niveau bas VL (par exemple égal à 0 volt).

Lorsqu'on ne souhaite pas d'émission par la cathode, la tension Vc est modulée de façon appropriée et passe, par exemple, à 40 volts. Au cours de la phase d'émission, l'anode est portée à une tension continue Va (cf. figure 3B) (par exemple de 3000 volts) et la tension Vg2 appliquée sur la grille supplémentaire (voir figure 3D) est portée à un potentiel permettant la transmission de tout ou partie des électrons vers l'anode. La tension Vg2 est, par exemple, égale à 250 volts pour une grille suspendue.

Lors de la phase de régénération, il n'est avantageusement pas nécessaire de commuter la tension Va d'une valeur élevée vers une valeur suffisamment basse pour assurer la répulsion des électrons émis par les éléments à effet de champ. La tension Va peut alors être fixée à une valeur élevée continue pouvant atteindre plusieurs kilovolts et qui est identique à la tension appliquée à l'anode au cours de la phase d'émission.

Selon l'invention, une barrière de potentiel est créée au cours de la phase de régénération entre la grille d'extraction et l'anode en commutant la tension Vg2 appliquée sur la grille supplémentaire entre une tension nominale VN permettant aux électrons émis d'atteindre l'anode et une tension de blocage VB empêchant le passage des électrons qui retombent au niveau de la cathode.

La tension VN peut être, par exemple, égale à 250 volts et la tension VB, par exemple, égale à 0 volt dans le cas d'une grille intermédiaire suspendue entre anode et cathode. L'écart de tension à commuter est ainsi ramené à un niveau facile à mettre en oeuvre (250 Volts dans l'exemple mentionné ci-dessus).

Lors de la phase de régénération, les tensions appliquées sur la cathode et sur la grille d'extraction doivent être telles qu'il y a émission d'électrons. A titre d'exemple on a représenté Vc avec une tension identique à celle de la phase d'émission et la tension Vg1 avec une impulsion identique en amplitude à celle de la phase d'émission (la durée des impulsions de Vg1 peut être différente).

Pour qu'il n'y ait pas d'émission parasite d'électrons en direction de l'anode, la durée de l'impulsion de tension Vg1 doit être au plus égale à la durée de la phase de régénération et, de façon avantageuse, plus petite.

La grille supplémentaire peut être monolithique ou réalisée sous forme de conducteurs disposés en lignes ou en colonnes et reliés à un même potentiel. Elle peut être réalisée directement sur la cathode (grille intégrée), comme dans l'exemple de mode de réalisation décrit en figure 2, ou être montée en tant qu'élément séparé situé entre la grille d'extraction et l'anode (grille suspendue).

Selon l'invention, en dehors des phases de régénération, la grille supplémentaire autorise le transfert des électrons.

Avantageusement, lors des phases d'émission des électrons, la grille supplémentaire peut alors être portée à une tension qui provoque, en outre, dans certaines applications telles que, par exemple, les applications aux écrans plats, une focalisation des électrons (cf. figure 2 à titre d'exemple non limitatif). La tension de focalisation peut alors être appliquée pendant toute la durée de la phase d'émission et même au-delà.

Il y a alors alternance de phases de bombardement d'électrons focalisés sur l'anode et de phases de blocage des électrons pendant lesquelles les électrons émis retombent vers la cathode.

De même, lors des phases d'émission, la grille supplémentaire est de préférence portée à une tension qui permet, dans certaines applications telles que, par exemple, les applications aux tubes à rayons X, de protéger la cathode du champ de l'anode.

L'invention permet avantageusement de réaliser un moyen permettant un blocage des électrons entre cathode et anode sans rendre plus complexe la structure.

Pour appliquer les cycles (phases d'émission et de régénération) à une structure comportant des éléments à effet de champ disposés sous forme d'une matrice de lignes et de colonnes, on peut :
- soit appliquer successivement une phase d'émission et une phase de régénération à chaque ligne balayée au cours d'une trame,
- soit balayer l'ensemble ou des paquets de lignes d'une trame en leur appliquant successivement une phase d'émission et appliquer ensuite soit successivement soit collectivement la phase de régénération,
- soit balayer plusieurs fois l'ensemble des lignes en leur appliquant successivement une phase d'émission et appliquer ensuite sur l'ensemble des lignes soit successivement, soit collectivement, par paquets ou à l'ensemble de la trame, la phase de régénération.

Ainsi, pour une efficacité maximale, la phase de régénération concernera de manière séquentielle et/ou collective l'ensemble des éléments à effet de champ de la cathode.

La phase de régénération est un temps mort pour l'utilisation de la source. La durée de la phase de régénération doit donc être minimisée pour ne pas trop réduire le taux d'utilisation de la source (et donc la luminance dans le cas de l'application à la visualisation). En pratique, la phase de régénération peut représenter 5 à 10% de la durée de la phase d'émission.

Le procédé selon l'invention s'applique à tout type connu de structure à éléments à effet de champ muni d'une grille supplémentaire.

Comme cela a été mentionné précédemment, le procédé selon l'invention peut, par exemple, s'appliquer à une structure intégrée telle que décrite en figure 2. Dans ce cas, en appliquant à la grille supplémentaire une tension très inférieure à la fois à la tension à appliquer pour la refocalisation et à la tension de polarisation des éléments à effet de champ, une barrière de potentiel est créée entre la grille supplémentaire et l'anode. Les électrons émis retombent alors vers la cathode.

Un autre exemple d'application de l'invention concerne le cas où une grille supplémentaire est interposée entre la cathode et l'anode comme décrit dans le brevet US-5 543 691. Dans ce cas, en appliquant à la grille supplémentaire une tension inférieure à la tension de la grille d'extraction et préférablement inférieure ou égale à la tension de polarisation des éléments à effet de champ, une barrière de potentiel infranchissable pour les électrons émis est créée dans le plan de la grille intermédiaire.

## Revendications

1. Procédé de commande de structure à éléments à effet de champ, la structure comprenant une cathode (1) munie d'éléments à effet de champ, une anode (2), une grille d'extraction (7) et une grille supplémentaire (14), le procédé comprenant au moins une phase d'émission d'électrons par les éléments à effet de champ vers l'anode et au moins une phase de régénération pendant laquelle les électrons issus des éléments ne sont pas transmis à l'anode, **caractérisé en ce que** la phase de régénération est mise en oeuvre par application sur la grille supplémentaire (14) d'un potentiel de blocage (VB) des électrons qui retournent vers la cathode.

2. Procédé selon la revendication 1, **caractérisé en ce qu'**au cours d'une phase d'émission d'électrons une tension de focalisation est appliquée sur la grille supplémentaire (14).

3. Procédé selon la revendication 1, **caractérisé en ce qu'**au cours d'une phase d'émission d'électrons une tension destinée à protéger la cathode du champ de l'anode est appliquée sur la grille supplémentaire (14).

4. Procédé selon l'une quelconque des revendications 1 à 3, **caractérisé en ce que** le procédé de commande comprend au moins un cycle d'adressage, chaque cycle comportant une phase de régénération (II) qui succède à une phase d'émission (I) ou inversement.

5. Procédé selon la revendication 4, **caractérisé en ce que** la phase de régénération s'applique de façon séquentielle et/ou collective à tous les éléments à effet de champ de la structure.

6. Procédé selon la revendication 5, **caractérisé en ce que**, ladite structure comportant des éléments à effet de champ disposés sous forme d'une matrice de lignes et de colonnes, on peut :
- soit appliquer successivement une phase d'émission et une phase de régénération, à chaque ligne balayée au cours d'une trame,
- soit balayer l'ensemble ou des paquets de lignes d'une trame en leur appliquant successivement une phase d'émission et appliquer ensuite soit successivement soit collectivement la phase de régénération,
- soit balayer plusieurs fois l'ensemble des lignes en leur appliquant successivement une phase d'émission et appliquer ensuite sur l'ensemble des lignes soit successivement, soit collectivement, par paquets ou à l'ensemble de la trame, la phase de régénération.

7. Procédé selon l'une quelconque des revendications 1 à 6, **caractérisé en ce que** la tension (Va) appliquée à l'anode (2) pendant la phase de régénération est identique à la tension appliquée à l'anode pendant la phase d'émission.

8. Procédé de visualisation d'images sur écran, **caractérisé en ce qu'**il met en oeuvre un procédé selon l'une quelconque des revendications 1 à 7.

9. Procédé de formation d'images sur un tube à rayons X, **caractérisé en ce qu'**il met en oeuvre un procédé selon l'une quelconque des revendications 1 à 7.

## Patentansprüche

1. Verfahren zur Steuerung einer Struktur mit Feldeffektelementen, wobei die Struktur eine mit Feldeffektelementen ausgestattete Katode (1), eine Anode (2), ein Extraktionsgitter (7) und ein zusätzliches Gitter (14) umfasst, und das Verfahren wenigstens eine Phase der Emission von Elektronen durch die Feldeffektelemente zur Anode und wenigstens eine Regenerationsphase umfasst, während der die von den Elementen stammenden Elektronen nicht zur Anode übertragen werden,
**dadurch gekennzeichnet, dass** die Regenerationsphase realisiert wird mit Hilfe eines an das zusätzliche Gitter (14) angelegten Sperrpotentials (VB) für Elektronen, so dass diese zur Katode zurückkehren.

2. Verfahren nach Anspruch 1, **dadurch gekennzeichnet, dass** im Laufe einer Elektronenemissionsphase an das zusätzliche Gitter (14) eine Fokussierspannung gelegt wird.

3. Verfahren nach Anspruch 1, **dadurch gekennzeichnet, dass** im Laufe einer Elektronenemissionsphase an das zusätzliche Gitter (14) eine Spannung gelegt wird, die dazu dient, die Katode vor dem Anodenfeld zu schützen.

4. Verfahren nach einem der Ansprüche 1 bis 3, **dadurch gekennzeichnet, dass** das Steuerungsverfahren wenigstens einen Adressierzyklus umfasst, wobei jeder Zyklus eine Regenerationsphase (II) enthält, die auf eine Emissionsphase (I) folgt, oder umgekehrt.

5. Verfahren nach Anspruch 4, **dadurch gekennzeichnet, dass** die Regenerationsphase allen Feldeffektelementen der Struktur in sequentieller und/oder kollektiver Weise zugeordnet wird.

6. Verfahren nach Anspruch 5, wobei die genannte Struktur in Form einer Matrix aus Zeilen und Spalten angeordnete Feldeffektelemente umfasst, **dadurch gekennzeichnet:**
- **dass** man entweder jeder während eines Bildrasters bzw. Teilbilds abgetasteten Zeile sukzessiv eine Emissionsphase und eine Regenerationsphase zuordnet,
- oder die Gesamtheit der Zeilen oder Zeilenpakete eines Bildrasters bzw. Teilbilds abtastet, indem man ihnen sukzessiv eine Emissionsphase zuordnet und anschließend, entweder sukzessiv oder kollektiv, die Regenerationsphase zuordnet,
- oder mehrmals die Gesamtheit der Zeilen abtastet, indem man ihnen sukzessiv eine Emissionsphase zuordnet, und anschließend der Gesamtheit der Zeilen, entweder sukzessiv oder kollektiv, pro Paket oder Gesamtheit des Bildrasters bzw. Teilbilds, die Regenerationsphase zuordnet.

7. Verfahren nach einem der Ansprüche 1 bis 6, **dadurch gekennzeichnet, dass** die während der Regenerationsphase an die Anode (2) gelegte Spannung (VP) gleich der während der Emissionsphase an die Anode gelegten Spannung ist.

8. Verfahren zur Bildanzeige auf einem Bildschirm, **dadurch gekennzeichnet, dass** ein Verfahren nach einem der Ansprüche 1 bis 7 angewendet wird.

9. Verfahren zur Bilderzeugung in einer Röntgenstrahlröhre, **dadurch gekennzeichnet, dass** es ein Verfahren nach einem der Ansprüche 1 bis 7 anwendet.

## Claims

1. Control process for a structure with field effect elements, the structure comprising a cathode (1) equipped with field effect elements, an anode (2), an extraction grid (7) and an additional grid (14), the process comprising at least one phase in which electrons are emitted to the anode by field effect elements, and at least one regeneration phase during which the electrons output from the elements are not transmitted to the anode, **characterized in that** the regeneration phase is implemented by applying an electron blocking voltage (VB) to the additional grid (14) such that electrons drop back to the cathode.

2. Process according to claim 1, **characterized in that** a focusing voltage is applied to the additional grid (14), during an electron emission phase.

3. Process according to claim 1, **characterized in that** a voltage intended to protect the cathode from the anode field is applied to the additional grid (14), during an electron emission phase.

4. Process according to any one of claims 1 to 3, **characterized in that** the control process comprises at least one addressing cycle, each cycle comprising a regeneration phase (II) that follows an emission phase (I) or conversely.

5. Process according to claim 4, **characterized in that** the regeneration phase is applied sequentially and/or collectively to all field effect elements of the structure.

6. Process according to claim 5, **characterized in that** said structure comprises field effect elements arranged in the form of a matrix of rows and columns, and it is possible to:
- either apply an emission phase and a regeneration phase in sequence to each row scanned during a frame,
- or scan all rows or packets of rows in the frame by applying an emission phase in sequence and then applying the regeneration phase either in sequence or collectively,
- or scan all rows several times by applying an emission phase and then applying the regeneration phase to all rows either successively or collectively by packet or to the entire frame.

7. Process according to any one of claims 1 to 6, **characterized in that** the voltage (Va) applied to the anode (2) during the regeneration phase is identical to the voltage applied to the anode during the emission phase.

8. Image display process on screen, **characterized in that** it uses a process according to any one of claim 1 to 7.

9. Process for formation of images on an X-ray tube, **characterized in that** it uses a process according to any one of claims 1 to 7.
